(19) Europäisches Patentamt
European Patent Office
Office européen des brevets

(11) **EP 4 255 662 B1**

(12) **EUROPÄISCHE PATENTSCHRIFT**

(45) Veröffentlichungstag und Bekanntmachung des Hinweises auf die Patenterteilung:
**20.11.2024   Patentblatt 2024/47**

(21) Anmeldenummer: **21823269.2**

(22) Anmeldetag: **30.11.2021**

(51) Internationale Patentklassifikation (IPC):
***B23K 9/095*** *(2006.01)*      ***B23K 9/10*** *(2006.01)*

(52) Gemeinsame Patentklassifikation (CPC):
**B23K 9/1006; B23K 9/0953**

(86) Internationale Anmeldenummer:
**PCT/EP2021/083516**

(87) Internationale Veröffentlichungsnummer:
**WO 2022/117546 (09.06.2022 Gazette 2022/23)**

(54) **VERFAHREN ZUR LIMITIERUNG EINER SCHWEISSLEISTUNG EINES SCHWEISSGERÄTS**

METHOD FOR LIMITING THE WELDING POWER OF A WELDING DEVICE

METHODE POUR LIMITER LA PUISSANCE D'UN APPAREIL DE SOUDAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2020   EP 20210958**

(43) Veröffentlichungstag der Anmeldung:
**11.10.2023   Patentblatt 2023/41**

(73) Patentinhaber: **FRONIUS INTERNATIONAL GmbH**
**4643 Pettenbach (AT)**

(72) Erfinder:
• **MAGERL, Christian**
**4600 Wels-Thalheim (AT)**
• **MUSIL, Franz Peter**
**4600 Wels-Thalheim (AT)**
• **LATTNER, Peter**
**4600 Wels-Thalheim (AT)**
• **EBERL, Robert**
**4600 Wels-Thalheim (AT)**

(74) Vertreter: **Patentanwälte Pinter & Weiss OG**
**Prinz-Eugen-Straße 70**
**1040 Wien (AT)**

(56) Entgegenhaltungen:
**US-A1- 2009 277 893      US-A1- 2011 309 053**
**US-A1- 2018 056 428**

**Beschreibung**

Die gegenständliche Erfindung betrifft ein Verfahren zum Betrieb eines Schweißgeräts, wobei das Schweißgerät durch eine Energiequelle mit einer Versorgungsleistung versorgt wird und zur Erzeugung eines Schweißlichtbogens zumindest einen Teil der Versorgungsleistung in eine Schweißleistung wandelt, wobei die Schweißleistung durch Vorgabe eines Schweißstroms geregelt wird, wobei eine Versorgungsspannung ermittelt wird. Weiters betrifft die gegenständliche Erfindung ein Schweißgerät zur Erzeugung eines Schweißlichtbogens durch Wandlung einer Versorgungsleistung in eine Schweißleistung, wobei das Schweißgerät ausgestaltet ist, die Schweißleistung mittels eines vorgegebenen Schweißstroms zu regeln.

Ein Schweißgerät erzeugt während eines Schweißprozesses, d.h. während dem Zünden und Brennen eines Schweißlichtbogens, an einer Elektrode eine Schweißspannung und einen Schweißstrom. Dabei gibt das Schweißgerät durch den Schweißlichtbogen eine Schweißleistung ab, welche sich wiederum aus dem Produkt der Schweißspannung und des Schweißstroms zusammensetzt. Das Schweißgerät wird von einer Energiequelle mit einer Versorgungsleistung versorgt, wobei beispielsweise ein Energieversorgungsnetz oder ein Generator als Energiequelle vorgesehen sein können. Zur Versorgung des Schweißgeräts durch die Energiequelle können natürlich auch Spannungswandler (Wechselrichter, Gleichrichter, Umrichter etc.) zwischen Energiequelle und Schweißgerät vorgesehen sein. Die Wandlung der Versorgungsleistung in die Schweißleistung erfolgt durch ein Leistungsteil, wobei das Schweißgerät die Schweißleistung durch Vorgabe des Schweißstroms regelt. Beispielsweise kann der Schweißstrom auf einen vorgegebenen Sollwert geregelt werden. Die Schweißspannung kann beispielsweise manuell durch die Länge des Schweißlichtbogens eingestellt werden.

Es sind Verfahren bekannt, um die abgegebene Schweißleistung zu begrenzen. Die DE 35 23 879 A1 offenbart ein Verfahren zur Begrenzung der Schweißleistung, um Spritzer beim Schweißen zu verhindern. Dies erfolgt, indem ein die Schweißleistung über den Schweißstrom und eine Schweißspannung gemessen wird und weiters auf einen vorab vorgegebenen Grenzwert limitiert wird.

Aus der US 2018/0056428 A1 ist eine Stromversorgung für eine Schweißgerät bekannt, welche eine Funktionalität zur dynamischen Leistungsbegrenzung aufweist. Dazu werden einem Steuermodul der Stromversorgung statische und dynamische Parameter der Stromversorgung, wie z.B. Informationen über eine maximale Verlustleistung, eine maximale Nutzleistung, Temperatur- oder Leistungsreduktion, tatsächliche Eingangs- und Ausgangsspannungswerte, tatsächliche Eingangs- und Ausgangsstromwerte, etc. von weiteren Modulen der Stromversorgung zur Verfügung gestellt. Vom Steuermodul werden dann auf Basis der statischen und/oder dynamischen Parameter eine maximale Ausgangsleistung oder Verlustleistung sowie eine maximal zulässige Ausgangsleistung oder Verlustleistung als dynamische Ausgangsrahmenbedingungen bestimmt und darauf basierend die Ausgangsparameter (d.h. Ausgangsspannung, Ausgangsstrom und/oder Ausgangsleistung) angepasst werden.

Weiterhin ist aus der US 2009/0277893 A1 ein Schweißsystem sowie ein zugehöriges Verfahren bekannt, bei welchem auf Basis von eingebbaren Konfigurationsparametern (z.B. Drahtdurchmesser, Materialdicke, etc.) ein Ausgangsleistungscharakteristik ermittelt wird. Die aktuelle Eingangsspannung bzw. Eingangsleistung wird dann überwacht und mit einer idealen Eingangsspannung bzw. Eingangsleistung z.B. ohne Schwankungen, etc. verglichen. Bei Abweichungen der aktuellen Eingangsleistung von der idealen Eingangsleistung wird dann die Ausgangsleistung entsprechend der ermittelten Ausgangscharakteristik angepasst.

Es ist eine Aufgabe der gegenständlichen Erfindung, ein Verfahren und ein Schweißgerät anzugeben, welche einen stabilen Schweißprozess ermöglichen.

Diese Aufgabe wird erfindungsgemäß durch ein Verfahren gelöst, wobei ein maximaler, von der Energiequelle an das Schweißgerät abgebbarer Versorgungsstrom vorgegeben wird und unter Verwendung der Versorgungsspannung und des maximalen Versorgungsstroms eine maximale Versorgungsleistung berechnet wird, aus der maximalen Versorgungsleistung eine maximale vom Schweißgerät abgegebene Schweißleistung ermittelt wird, und die Schweißleistung auf die maximale abgebbare Schweißleistung limitiert wird.

Weiters wird die Aufgabe durch ein Schweißgerät gelöst, wobei eine Berechnungseinheit vorgesehen ist, welche ausgestaltet ist, aus einer Versorgungsspannung des Schweißgeräts und einem maximalen, von der Energiequelle an das Schweißgerät abgebbaren Versorgungsstrom eine maximale Versorgungsleistung zu berechnen und aus der maximalen Versorgungsleistung eine maximale vom Schweißgerät abgegebene Schweißleistung zu ermitteln, und eine Limitiereinheit vorgesehen ist, welche ausgestaltet ist die abgegebene Schweißleistung auf die maximale abgebbare Schweißleistung zu limitieren. Es wird also bei einer Regelung der Schweißleistung die maximal abgebbare Schweißleistung berücksichtigt.

Die Limitierung der Schweißleistung erfolgt somit nicht auf Basis eines vorab bekannten Grenzwerts, sondern auf Basis der aktuellen maximalen Versorgungsleistung, welche sich wiederum unter Verwendung der aktuellen Versorgungsspannung ergibt. Aus der aktuellen maximalen Versorgungsleistung kann wiederum die aktuelle maximale Schweißleistung ermittelt werden, auf Basis welcher die abzugebende Schweißleistung limitiert wird. Damit wird verhindert, dass das Schweißgerät versucht eine Schweißleistung auszuregeln, welche jedoch gar nicht abgegeben werden kann. Damit kann ein unerwünschter Abbruch des Schweißprozesses durch einen unerwünschten Abriss des Schweißlichtbogens verhindert werden. Schwankungen der Versorgungsspannung können insbesondere aufgrund langer Zuleitungen zwischen der Energiequelle und dem Schweißgerät oder bei Verwendung eines Generators als Energiequelle auftreten.

Es ist vorteilhaft, wenn eine Messeinheit vorgesehen ist, welche ausgestaltet ist die Versorgungsspannung zu messen. Damit kann sichergesellt werden, dass die aktuelle Versorgungsspannung bekannt ist. Es ist natürlich auch vorstellbar, dass die Versorgungsspannung auf andere Art und Weise vorgegeben wird, beispielsweise wenn das Schweißgerät an eine Energiequelle mit einer anderen Versorgungsspannung angeschlossen wird.

Vorteilhafterweise wird die Schweißleistung durch eine Limitierung des Schweißstroms limitiert. Hierzu kann die Limitiereinheit ausgestaltet sein, den Schweißstrom zu limitieren, um die abgegebene Schweißleistung auf die maximale abgebbare Schweißleistung zu limitieren. Dies kann bei Vorliegen eines Stromreglers zur Regelung der Schweißleistung über den Schweißstrom erfolgen, indem der Sollwert (d.h. der Sollstrom) und/oder die Stellgröße des Stromreglers limitiert wird. Wird die Stellgröße limitiert, so ist es vorteilhaft, wenn eine Anti-Wind-Up-Maßnahme implementiert ist, um zu verhindern, dass der Stromregler versucht die limitierte Stellgröße auszuregeln. Anti-Wind-Up-Maßnahmen sind grundlegend bekannt, weshalb an dieser Stelle nicht näher darauf eingegangen wird.

Es ist vorteilhaft, wenn ein maximaler, von der Energiequelle an das Schweißgerät abgebbarer oder vom Schweißgerät aufnehmbarer Versorgungsstrom, vorzugweise durch einen Benutzer oder durch automatische Erkennung, vorgegeben und die maximale Versorgungsleistung aus der Versorgungsspannung und dem maximalen Versorgungsstrom berechnet wird. Der maximale Versorgungsstrom kann einem Abschaltstrom einer Überstromsicherung entsprechen. Der maximale Versorgungsstrom wird im Gegensatz zur Versorgungsspannung, welche als variabel angenommenen wird, fest vorgegeben. Es wird dabei davon ausgegangen, dass der Versorgungsstrom den maximalen Versorgungsstrom nicht überschreitet.

Vorzugsweise wird die maximale vom Schweißgerät abgegebene Schweißleistung unter Berücksichtigung einer Betriebsleistung aus der maximalen von der Energiequelle an das Schweißgerät abgebbare Versorgungsleistung ermittelt. Die Versorgungsleistung dient in diesem Fall nicht nur zur Abgabe der Schweißleistung, sondern auch der Versorgung mit einer Betriebsleistung zum weiteren Betrieb des Schweißgeräts. Somit ist die maximale Schweißleistung durch die Versorgungsleistung abzüglich der Betriebsleistung limitiert. Das bedeutet, dass die maximale Schweißleistung der maximalen Versorgungsleistung minus der Betriebsleistung entspricht.

Die Limitiereinheit kann aktivierbar und deaktivierbar ausgestaltet sein. Damit kann beispielsweise ein Benutzer entscheiden, ob bei einer Änderung der Leistungsgröße die Schweißleistung limitiert wird, oder ob kein derartiger Eingriff erwünscht ist. Insbesondere wenn keine Änderung der Versorgungsspannung zu erwarten ist, kann es vorteilhaft sein die Limitiereinheit zu deaktivieren.

Die gegenständliche Erfindung wird nachfolgend unter Bezugnahme auf die Figuren 1 bis 6c näher erläutert, die beispielhaft, schematisch und nicht einschränkend vorteilhafte Ausgestaltungen der Erfindung zeigen. Dabei zeigt

Fig. 1 ein schematisches Schweißgerät,

Fig. 2 ein schematisches Schweißgerät mit einem Schweißleistungsteil,

Fig. 3 ein Schweißgerät mit einer Berechnungseinheit und einer Limitiereinheit,

Fig. 4a, b, c die zeitlichen Verläufe von Versorgungsspannung, Versorgungsstrom, Schweißleistung, Schweißspannung und Schweißstrom,

Fig. 5a, b, c die detaillierten Verläufe von Versorgungsspannung, Versorgungsstrom, Schweißleistung, Schweißspannung und Schweißstrom bei einem Absinken der Versorgungsspannung,

Fig. 6a, b, c die detaillierten Verläufe von Versorgungsspannung, Versorgungsstrom, Schweißleistung, Schweißspannung und Schweißstrom bei einer erfindungsgemäßen Limitierung.

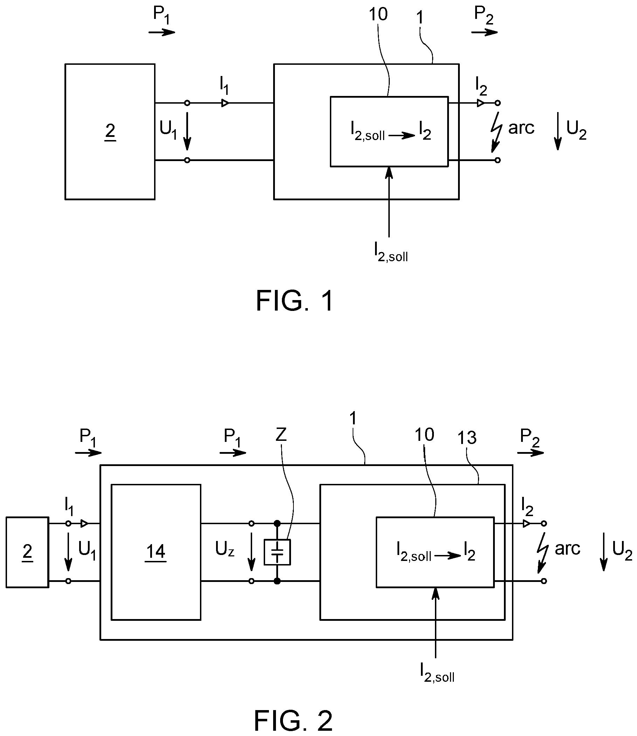

In Fig. 1 ist ein schematisches Schweißgerät 1 dargestellt, welches von einer Energiequelle 2 mit einer Versorgungsleistung $P_1$ versorgt wird. Die Energiequelle 2 stellt dem Schweißgerät 1 hierzu eine Versorgungsspannung $U_1$ und einen Versorgungsstrom $I_1$ zur Verfügung, wobei die Versorgungsleistung $P_1$ als Produkt der Versorgungsspannung $U_1$ und des Versorgungsstroms $I_1$ darstellbar ist: $P_1 = U_1 \cdot I_1$.

Das Schweißgerät 1 erzeugt während eines Schweißvorgangs durch Abgabe einer Schweißleistung $P_2$ einen Schweißlichtbogen arc an einer Elektrode. Die Schweißleistung $P_2$ kann als Produkt des Schweißstroms $I_2$ und der Schweißspannung $U_2$ dargestellt werden: $P_2 = U_2 \cdot I_2$. Somit wird vom Schweißgerät 1 während des Schweißvorgangs, d.h. bei brennendem Schweißlichtbogen arc, ein über die Elektrode fließender Schweißstrom $I_2$ erzeugt, d.h. gezündet und aktiv gehalten, während sich an der Elektrode die Schweißspannung $U_2$ einstellt. Die Schweißspannung $U_2$ ist, beispielsweise durch Messung, bekannt.

Es ist weiters ein Schweißregler 10 vorgese-

hen, um die Schweißleistung $P_2$ zu regeln. In den dargestellten Figuren ist als Schweißregler 10 ein Stromregler vorgesehen, welcher den Schweißstrom $I_2$ regelt, um wiederum die Schweißleistung $P_2$ zu regeln. Der Schweißregler 10 bekommt, beispielsweise von einem Benutzer, eine Sollgröße vorgegeben, um die Schweißleistung $P_2$ zu regeln. Im dargestellten Stromregler wird ein Sollstrom $I_{2,soll}$ vorgegeben, um den Schweißstrom $I_2$ zu regeln. Während der Abgabe des Schweißstroms $I_2$ stellt sich die Schweißspannung $U_2$ ein, welche z.B. durch eine Justierung der Länge des Schweißlichtbogens arc, beispielsweise durch eine Abstandsänderung des Schweißbrenners/der Elektrode zum Werkstück, beeinflussbar ist. Das bedeutet, dass die Schweißleistung $P_2$ einerseits durch den entsprechend des eingestellten Sollstroms $I_{2,soll}$ geregelten Schweißstrom $I_2$ und andererseits durch die Schweißspannung $U_2$ vorgegeben wird.

Das Schweißgerät 1 kann, wie in Fig. 2 angedeutet, auch einen Spannungswandler 14, d.h. ein Wechselspannungs-Gleichspannungs-Wandler (AC/DC-Wandler) oder ein Gleichspannungs-Gleichspannungs-Wandler (DC/DC-Wandler) und ein mit dem Spannungswandler 14 verbundenes Schweißleistungsteil 13 umfassen, wobei der Spannungswandler 14 die Versorgungsspannung $U_1$ in eine an einem kapazitiven Zwischenkreis Z anliegende Zwischenkreisspannung $U_z$ wandelt, womit die Versorgungsleistung $P_1$ im Zwischenkreis Z zwischengespeichert wird. Das Schweißleistungteil 13 wird vom Zwischenkreis Z gespeist und gibt während des Schweißprozesses entsprechend der Vorgabe des Schweißreglers 10 den Schweißstrom $I_2$ und damit die Schweißleistung $P_2$ ab. Die unterschiedlichen grundlegenden Konstruktionsmöglichkeiten von Schweißgeräten 1 sind bekannt, weshalb an dieser Stelle nicht näher darauf eingegangen wird.

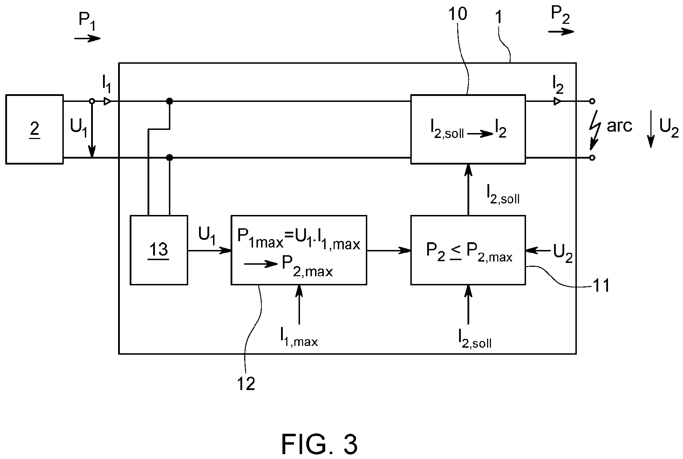

Fig. 3 wird das allgemeine Schweißgerät 1 aus Fig. 1 zur Darstellung der Erfindung verwendet. Natürlich ist die Erfindung auch auf das Schweißgerät 1 nach Fig. 2 oder andere Arten von Schweißgeräten 1 anwendbar.

Es ist erfindungsgemäß eine Berechnungseinheit 12 vorgesehen, welche ausgestaltet ist, die maximale, von der Energiequelle 2 an das Schweißgerät 1 abgebbare, Versorgungsleistung $P_{1,max}$ zu berechnen. Vorteilhafterweise wird die maximale Versorgungsleistung $P_{1,max}$ aus dem Produkt der Versorgungsspannung $U_1$, welche vorerst als konstant angenommen wird, und einem maximalen von der Energiequelle 1 abgebbaren Versorgungsstrom $I_{1,max}$ berechnet: $P_{1,max} = U_1 \cdot I_{1,max}$. Die Versorgungsspannung $U_1$ wird vorzugsweise mittels einer Messeinheit 13 ermittelt.

Der maximale Versorgungsstrom $I_{1,max}$ kann durch einen Abschaltstrom einer Überstromsicherung vorgegeben und beispielsweise von einem Benutzer manuell am Schweißgerät 1 oder durch eine automatische Erkennung der Art der Energiequelle 2 eingestellt oder auch voreingestellt werden.

Die maximale von dem Schweißgerät 1 abgebbare Schweißleistung $P_{2,max}$ entspricht grundlegend der maximal vom Schweißgerät 1 aufgenommenen (und damit von der Energiequelle 2 abgegebenen) Versorgungsleistung $P_{1,max}$. Es kann jedoch auch eine Betriebsleistung $P_b$, welche für den Betrieb des Schweißgeräts 1, z.B. für ein Zwischenspeichern einer Zwischenenergie im Zwischenkreis Z, erforderlich ist, vorgesehen sein. Wird die Betriebsleistung $P_b$ ebenso aus der Versorgungsleistung $P_1$ bezogen, so wird diese bei der Ermittlung der maximalen Schweißleistung $P_{2,max}$ die Betriebsleistung $P_b$ von der Versorgungsleistung subtrahiert: $P_{2,max} = P_{1,max} - P_b$.

Die Betriebsleistung $P_b$ kann auch als Produkt der Versorgungsspannung $U_1$ und eines Betriebsstroms $I_b$ dargestellt werden, womit die maximale Schweißleistung $P_{2,max}$ wiederum als $P_{2,max} = U_1(I_{1,max} - I_b)$ dargestellt werden kann.

Es kann der Fall eintreten, dass der Schweißregler 10 einen Schweißstrom $I_2$ ausregelt, welcher in Verbindung mit der auftretenden Schweißspannung $U_2$ eine Schweißleistung $P_2$ hervorrufen würde, welche die maximale Schweißleistung $P_{2,max}$ überschreitet. Dies kann beispielsweise passieren, wenn die maximale abgebbare Schweißleistung $P_{2,max}$ z.B. aufgrund einer verringerten Versorgungsspannung $U_1$ gesunken ist, oder wenn die Schweißspannung $U_2$ steigt.

Damit die tatsächlich auftretende Schweißleistung $P_2$ die maximale Schweißleistung $P_{2,max}$ nicht überschreitet, wird wiederum der Schweißstrom $I_2$ derart auf einen vorgegebenen Sollwert $I_{2,soll}$ geregelt, dass das Produkt aus Schweißstrom $I_2$ und Schweißspannung $U_2$ die aktuelle Schweißleistung $P_{2,max}$ nicht überschreitet. Wird die Schweißleistung $P_2$ nicht limitiert, so kann aufgrund eines zu hoch ansteigenden Versorgungsstroms $I_1$ (und entsprechender Abschaltung einer Überstromsicherung) und/oder einer zu stark absinkenden Versorgungsspannung $U_1$ unter eine kritische Versorgungsspannung $U_{1,min}$ (unter welcher kein Schweißvorgang möglich ist) der Schweißlichtbogen arc abreißen. Daher wird erfindungsgemäß die Schweißleistung $P_2$ von einer Limitiereinheit 11 auf die maximale Schweißleistung $P_{2,max}$ limitiert.

Vorzugsweise erfolgt dies durch Limitierung des Schweißstroms $I_2$, was wiederum durch Limitierung der Sollgröße $I_{2,soll}$ des geregelten Schweißstroms $I_2$ erfolgen kann, wie in Fig. 3 angedeutet. Es kann jedoch auch eine Limitierung der Stellgröße des Schweißreglers 10 erfolgen. Durch eine Limitierung des Schweißstroms $I_2$ kann sichergestellt werden, dass bei einer verringerten Schweißleistung $P_2$ die Schweißspannung $U_2$ aufrechterhalten werden kann.

In Folge wird beispielhafterweise die Limitierung des Schweißstroms $I_2$ (d.h. der Regelgröße) beschrieben. Es wird zu einem aktuellen Zeitpunkt die Differenzschweißleistung $\Delta P_2$ ermittelt, welche sich aus der Differenz der maximalen Schweißleistung $P_{2,max}$ und der abzugebenden Schweißleistung $P_2$ ergibt: $\Delta P_2 = P_{2,max} - P_2$.

Um die Schweißleistung für den aktuellen Regelungsschritt $P_{2,i}$ zu limitieren, kann die Schweißleistung $P_{2,i}$ gefiltert($P_{2,i}$ = Filter($P_{2,max}$ - $P_b$)) oder ungefiltert verwendet werden.

Werden weiters Verlustleistungen $P_{loss}$ berücksichtigt, so ergibt sich die Schweißleistung zu $P_{2,i}$ = $P_{2,max}$ - $P_b$ - $P_{loss}$ oder die gefilterte Schweißleistung $P_{2,i}$ = Filter($P_{2,max}$ - $P_b$ - $P_{loss}$). Die Verlustleistung $P_{loss}$ beschreibt vorzugsweise Schalt- und Leitendverluste in Halbleiterschaltern (Transistoren) sowie z.B. ohmsche Verluste in den Leitungen, Transformatoren etc. Im Zwischenkreis Z zwischengespeicherte Leistung ist hingegen von der Betriebsleistung $P_b$ umfasst.

Weiters kann der Schweißstrom $I_{2,i}$ für den aktuellen Regelungsschritt aus dem Quotienten der Schweißleistung $P_{2,i}$ des aktuellen Zeitpunkts und aktuell auftretenden Schweißspannung $U_2$ ermittelt werden

$$I_{2,i} = \frac{P_{2,i}}{U_2}$$

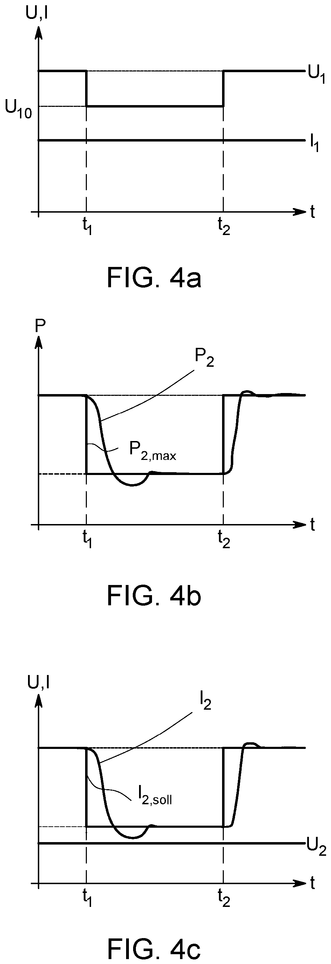

. Somit kann der Sollstrom $I_{2,soll}$ entsprechend angepasst werden. Damit wird der Schweißstrom $I_2$ jeweils im aktuellen Regelungsschritt limitiert, womit wiederum die Schweißleistung $P_2$ limitiert wird. Dabei kann erreicht werden, dass die Schweißspannung $U_2$ aufrechterhalten wird und damit der Schweißlichtbogen arc. Entsprechend sind in Fig. 4a, 4b, 4c Verläufe der Versorgungsspannung $U_1$, des Schweißstroms $I_2$ und der Schweißspannung $U_2$ dargestellt.

In Fig. 4a stellt beispielhafte Verläufe der Versorgungsspannung $U_1$ und des Versorgungsstroms $I_1$ dar. Der Versorgungsstrom $I_1$ ist in Fig. 4a durchgehend konstant. Die Versorgungsspannung $U_1$ befindet sich bis zu einem ersten Zeitpunkt $t_1$ auf einem ersten Spannungswert, sinkt nach dem ersten Zeitpunkt $t_1$ bis zu einem zweiten Zeitpunkt $t_2$ auf eine verringerte Versorgungsspannung $U_{10}$ ab und steigt nach dem zweiten Zeitpunkt $t_2$ wieder auf den ursprünglichen ersten Spannungswert an. Der Sprung der Versorgungsspannung $U_1$ von einem ersten konstanten Spannungswert auf eine konstante verringerte Versorgungsspannung $U_{10}$ und der darauffolgende sprunghafte Anstieg wieder auf den ersten konstanten Spannungswert dient lediglich einer einfacheren Darstellung und ist daher nur beispielhaft zu sehen. Ein Absinken der Versorgungsspannung $U_1$ kann beispielsweise durch eine Überlastung, einer Fehlfunktion etc. der Energiequelle 2 und/oder einer Zuleitung von der Energiequelle 2 an das Schweißgerät 1 entstehen. Der Verlauf der Versorgungsleistung $P_1$ (nicht explizit dargestellt) entspricht im dargestellten Fall dem Verlauf der Versorgungsspannung $U_1$, da der Versorgungsstrom $I_1$ konstant ist.

Fig. 4b stellt den Verlauf der Schweißleistung $P_2$ und Fig. 4c den Verlauf des Schweißstroms $I_2$ unter Anwendung des erfindungsgemäßen Verfahrens dar. Es wird der Schweißstrom $I_2$ bis zum Zeitpunkt $t_1$ auf den

unveränderten Sollstrom $I_{2,soll}$ geregelt. Als Produkt des Schweißstroms $I_2$ mit der Schweißspannung $U_2$ ergibt sich die Schweißleistung $P_2$.

Ab dem ersten Zeitpunkt $t_1$ sinkt die Versorgungsspannung $U_1$ auf die verringerte Versorgungsspannung $U_{10}$, wie oben beschrieben. Damit sinkt ab dem ersten Zeitpunkt $t_1$ auch die maximale Versorgungsleistung $P_{1,max}$, da der maximale Versorgungsstromes $I_{1,max}$ konstant vorgegeben wird.

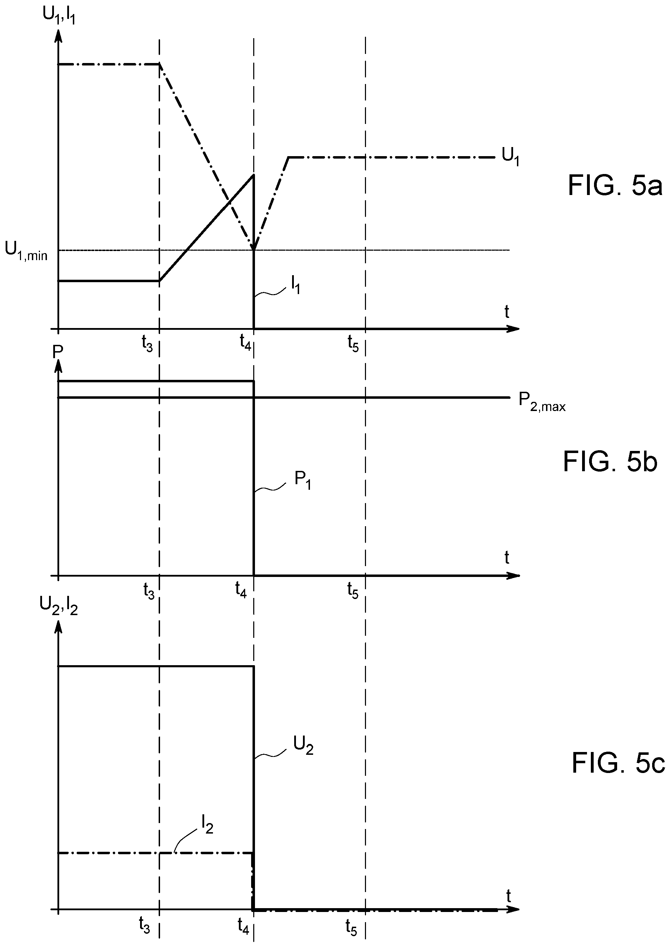

Damit sinkt ab dem ersten Zeitpunkt $t_1$ auch die Schweißleistung $P_2$ auf die nunmehr verringerte maximale Schweißleistung $P_{2,max}$, welche sich aus der maximalen Versorgungsleistung $P_{1,max}$ ergibt. Sollte der Schweißstrom $I_2$ ab dem ersten Zeitpunkt weiterhin (ohne Limitierung) auf den unveränderten Sollstrom $I_{2,soll}$ geregelt werden, so würde sich eine Erhöhung des Versorgungsstroms $I_1$ einstellen, wie unten in Bezug auf Fig. 5a, b, c beschrieben.

Daher wird vorteilhafterweise ab dem ersten Zeitpunkt $t_1$ der Schweißstrom $I_2$ limitiert (Fig. 4c), was durch Eingriff in den Sollstrom $I_{2,soll}$ oder die Stellgröße des Schweißreglers 10 erfolgen kann. Die damit limitierte Schweißleistung $P_2$ ergibt sich zwischen dem ersten Zeitpunkt $t_1$ und dem zweiten Zeitpunkt $t_2$ aus der vorgegebenen Schweißspannung $U_2$, welche nur beispielhaft konstant vorliegt, und aus dem geregelten Schweißstrom $I_2$, welcher hier limitiert wird. Die Anstiegszeit, die zeitliche Verzögerung sowie das Über- und Unterschwingen der Schweißleistung $P_2$ in Fig. 4b und des Schweißstroms $I_2$ in Fig. 4c sind extrem dargestellt und dienen lediglich zum besseren Verständnis der Erfindung.

Die Limitierung der Schweißleistung $P_2$ erfolgt, wie in den Figuren 4a, b, c zu erkennen ist, natürlich nicht instantan, da der Schweißregler 10 erst auf den neuen Sollwert oder Stellwert reagieren muss. Es ist grundlegend vorteilhaft, wenn die Limitierung des Schweißstroms $I_2$ nicht sprungartig erfolgt, da diese zu hörbaren Störgeräuschen führen kann Die Fig. 5a, b, c zeigen die detaillierten Verläufe der Versorgungsparameter, d.h. der Versorgungsspannung $U_1$ und des Versorgungsstroms $I_1$, sowie der Schweißparameter, d.h. der Schweißspannung $U_2$ und des Schweißstroms $I_2$, zum ersten Zeitpunkt $t_1$ in Fig. 4a, 4b, 4c, wenn eine erfindungsgemäße Regelung/Limitierung deaktiviert oder nicht vorgesehen ist. Der in Fig. 4a, b, c dargestellte erste Zeitpunkt $t_1$ wird hier also im Detail in Form der einzelnen Detailzeitpunkte $t_3$, $t_4$, $t_5$ dargestellt. Die Zeitdauer zwischen den Detailzeitpunkten $t_3$ und $t_5$ kann z.B. von 5 ms bis 5 s betragen, wobei bevorzugt eine Zeitdauer von 200 ms zwischen den Detailzeitpunkten $t_3$ und $t_5$ auftritt.

In Fig 5a fällt beispielhaft zum Detailzeitpunkt $t_3$, beispielsweise aufgrund von externen Einflüssen (Netzschwankungen), die Versorgungsspannung $U_1$ ab. Der Wert der Versorgungsspannung $U_1$ sinkt in diesem Fall solange ab, bis zum Detailzeitpunkt $t_4$ die kritische Versorgungsspannung $U_{1,min}$ erreicht wird. Bis zur kritischen Versorgungsspannung $U_{1,min}$ (dieser kann je nach Energiequelle 2 unterschiedlich sein) kann die Energiequelle 2 noch einen weiterhin konstanten Schweißstrom $I_2$ liefern. Beim Erreichen (oder Unterschreiten) der kritischen Versorgungsspannung $U_{1,min}$ zum Zeitpunkt $t_4$ schaltet das Schweißgerät 1 ab. Der Versorgungsstrom $I_1$ sinkt daher auf einen Wert von 0A (Fig. 5a). Nachdem der Versorgungsstrom $I_1$ auf 0A abgefallen ist, steigt die Versorgungsspannung $U_1$ wieder auf einen Wert an, welcher geringer als die Versorgungsspannung $U_1$ zum Zeitpunkt $t_3$ war.

Da das Schweißgerät 1 zum Zeitpunkt $t_4$ ausgeschaltet hat, tritt kein Schweißstrom $I_2$ und keine Schweißspannung $U_2$ auf (Fig. 5c), sodass der Schweißlichtbogen arc abreißt. Da der Versorgungsstrom $I_1$ zum Zeitpunkt $t_4$ auf 0A fällt, fällt weiters wie in Fig. 5b ersichtlich, die Versorgungsleistung $P_1$ zum Zeitpunkt $t_4$ auf einen Wert von 0W ab.

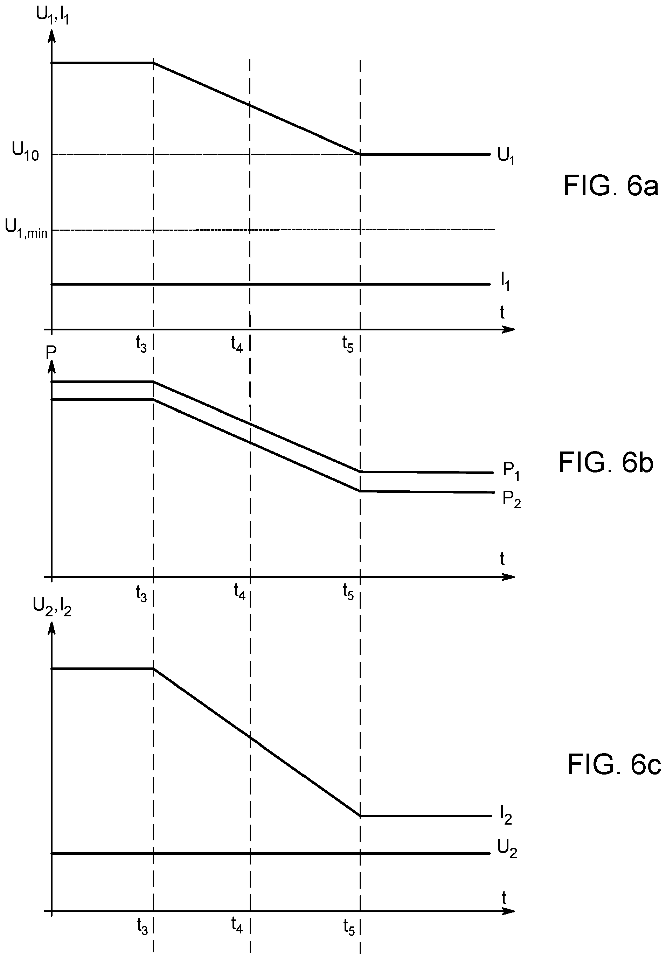

Die Fig. 6a, b, c zeigen analog zu Fig. 5a, b, c die detaillierten Verläufe der Versorgungsparameter sowie der Schweißparameter zum Zeitpunkt $t_1$, wobei die Detailzeitpunkte $t_3$, $t_4$, $t_5$ dargestellt sind. Im Unterschied zu Fig. 5a, b, c ist in Fig. 6a, b, c eine erfindungsgemäße Limitierung vorgesehen, wobei zur einfacheren Darstellung eine instantane idealisierte Regelung angenommen wird, weshalb hier der Schweißstrom $I_2$ sofort reduziert wird, sobald die Versorgungsspannung $U_1$ absinkt, womit es im Vergleich zu Fig 4b und 4c zu keiner zeitlichen Verzögerung, keiner Anstiegszeit und keinem Über- und Unterschwingen der Schweißleistung $P_2$ und des Schweißstroms $I_2$ kommt. Auch hier reduziert sich somit ab dem Detailzeitpunkt $t_3$, z.B. durch externe Einflüsse, die Versorgungsspannung $U_1$ (Fig. 6a). Da der Schweißstrom $I_2$ jedoch durch die erfindungsgemäße Limitierung reduziert wird, kann der Versorgungsstrom $I_1$ konstant gehalten werden. Dadurch erreicht oder unterschreitet die Versorgungsspannung $U_1$ die kritische Versorgungsspannung $U_{1,min}$ nicht, wodurch die das Schweißgerät 1 den Schweißlichtbogen arc aufrecht erhält. Durch das erfindungsgemäße Verfahren kann somit durch Reduktion des Schweißstroms $I_2$ ein zu schnelles Absinken der Versorgungsspannung $U_1$ verhindert werden, womit die kritische Versorgungsspannung $U_{1,min}$ nicht erreicht oder unterschritten wird und das Schweißgerät 1 nicht abschaltet. Ab dem Detailzeitpunkt $t_5$ ist die Versorgungsspannung $U_1$ auf die verringerte Versorgungsspannung $U_{10}$ abgesunken und verbleibt auf dieser, vgl. Fig. 4a.

Der Verlauf der Versorgungsleistung $P_1$ entspricht aufgrund des konstanten Versorgungsstroms $I_1$ (hervorgerufen durch die Limitierung der Schweißleistung $P_2$) dem Verlauf der Versorgungsspannung $U_1$. In Fig. 6b ist die abgebbare Versorgungsleistung $P_1$ als auch die Schweißleistung $P_2$ ersichtlich. Der Abstand zwischen den Verläufen der Versorgungsleistung $P_1$ und der Schweißleistung $P_2$ stellt die Verlustleistung $P_{loss}$ des Schweißsystems dar.

Die Berechnungseinheit 12 und/oder Limitiereinheit 11 können mikroprozessorbasierte Hardware umfassen, beispielsweise einen Computer oder Digitalen Signalprozessor (DSP), auf welcher entsprechende Software zum Durchführen der jeweiligen Funktion ausgeführt wird. Die Berechnungseinheit 12 und/oder Limitiereinheit 11 können auch integrierte Schaltungen umfassen, beispielsweise eine anwendungsspezifische integrierte Schaltung (ASIC) oder ein Field Programmable Gate Array (FPGA), oder ein Configurable Programmable Logic Device (CPLD) und/oder parallel dazu mit einem Mikroprozessor überwacht werden. Die Berechnungseinheit 12 und/oder Limitiereinheit 11 können aber auch einen analogen Schaltkreis oder analogen Computer umfassen. Auch Mischformen sind denkbar. Ebenso ist es möglich, dass verschiedene Funktionen auf derselben Hardware und/oder auf unterschiedlichen Hardware-Teilen implementiert sind. Besonders vorteilhaft sind Mischformen, bei denen einzelne Einheiten sowohl in Hardware, als auch in Software ausgeführt sind.

**Patentansprüche**

1. Verfahren zum Betrieb eines Schweißgeräts (1), wobei das Schweißgerät (1) durch eine Energiequelle (2) mit einer Versorgungsleistung ($P_1$) versorgt wird und zur Erzeugung eines Schweißlichtbogens (arc) zumindest einen Teil der Versorgungsleistung ($P_1$) in eine Schweißleistung ($P_2$) wandelt, wobei die Schweißleistung ($P_2$) durch Vorgabe eines Schweißstroms ($I_2$) geregelt wird, wobei eine Versorgungsspannung ($U_1$) ermittelt wird, **dadurch gekennzeichnet, dass** ein maximaler, von der Energiequelle (2) an das Schweißgerät (1) abgebbarer Versorgungsstrom ($I_{1,max}$) vorgegeben wird, dass aus der Versorgungsspannung ($U_1$) und dem maximalen Versorgungsstrom ($I_{1,max}$) eine maximale Versorgungsleistung ($P_{1,max}$) berechnet wird, **dass** aus der maximalen Versorgungsleistung ($P_{1,max}$) eine maximale vom Schweißgerät (1) abgegebene Schweißleistung ($P_{2,max}$) ermittelt wird, **und dass** die Schweißleistung ($P_2$) auf die maximale abgebbare Schweißleistung ($P_{2,max}$) limitiert wird.

2. Verfahren nach Anspruch 1, **dadurch gekennzeichnet,** die Schweißleistung ($P_2$) durch eine Limitierung des Schweißstroms ($I_2$) limitiert wird.

3. Verfahren nach einem der Ansprüche 1 bis 2, **dadurch gekennzeichnet, dass** die maximale vom Schweißgerät (1) abgegebene Schweißleistung ($P_{2,max}$) unter Berücksichtigung einer Betriebsleistung ($P_b$) aus der maximalen, von der Energiequelle (2) an das Schweißgerät (1) abgebbaren Versorgungsleistung ($P_{1,max}$) ermittelt wird.

4. Schweißgerät (1) zur Erzeugung eines Schweißlichtbogens (arc) durch Wandlung einer Versorgungsleistung (P1) in eine Schweißleistung ($P_2$), wobei das Schweißgerät (1) ausgestaltet ist, die Schweißleistung ($P_2$) mittels eines vorgegebenen Schweißstroms ($I_2$) zu regeln, **dadurch gekennzeichnet, dass** eine Berechnungseinheit (12) vorgesehen ist, welche ausgestaltet ist, aus einer Versorgungsspannung ($U_1$) des Schweißgeräts (1) und einem maximalen, von einer Energiequelle (2) an das Schweißgerät (1) abgebbaren Versorgungsstrom ($I_{1,max}$) eine maximale Versorgungsleistung ($P_{1,max}$) zu berechnen und aus der maximalen Versorgungsleistung ($P_{1,max}$) eine maximale vom Schweißgerät (1) abgegebene Schweißleistung ($P_{2,max}$) zu ermitteln, **und dass** eine Limitiereinheit (11) vorgesehen ist, welche ausgestaltet ist die abgegebene Schweißleistung ($P_2$) auf die maximale abgebbare Schweißleistung ($P_{2,max}$) zu limitieren.

5. Schweißgerät (1) nach Anspruch 4, **dadurch gekennzeichnet, dass** eine Messeinheit (13) vorgesehen ist, welche ausgestaltet ist die Versorgungsspannung ($U_1$) zu messen.

6. Schweißgerät (1) nach Anspruch 4 oder 5, **dadurch gekennzeichnet, dass** die Limitiereinheit (11) ausgestaltet ist, den Schweißstrom ($I_2$) zu limitieren, um die abgegebene Schweißleistung ($P_2$) auf die maximale abgebbare Schweißleistung ($P_{2,max}$) zu limitieren.

7. Schweißgerät (1) nach einem der Ansprüche 4 bis 6, **dadurch gekennzeichnet, dass** die Limitiereinheit (11) aktivierbar und deaktivierbar ausgestaltet ist.

## Claims

1. Method for operating a welding device (1), wherein the welding device (1) is supplied with a supply power ($P_1$) from an energy source (2) and converts at least a part of the supply power ($P_1$) into a welding power ($P_2$) to generate a welding arc (arc), wherein the welding power ($P_2$) is regulated by specifying a welding current ($I_2$), wherein a supply voltage ($U_1$) is determined, **characterized in that** a maximum supply current ($I_{1,max}$) that can be delivered to the welding device (1) by the energy source (2) is specified, **in that** a maximum supply capacity ($P_{1,max}$) is calculated from the supply voltage ($U_1$) and the maximum supply current ($I_{1,max}$), **in that** a maximum welding power ($P_{2,max}$) delivered by the welding device (1) is determined from the maximum supply power ($P_{1,max}$), **and in that** the welding power ($P_2$) is limited to the maximum welding power ($P_{2,max}$) that can be delivered.

2. Method according to claim 1, **characterized in that** the welding power ($P_2$) is limited by limiting the welding current ($I_2$).

3. Method according to one of claims 1 to 2, **characterized in that** the maximum welding power ($P_{2,max}$) delivered by the welding device (1) is determined from the maximum supply power ($P_{1,max}$) that can be delivered to the welding device (1) by the energy source (2), taking into account an operating power ($P_b$).

4. Welding device (1) for generating a welding arc (arc) by converting a supply power ($P_1$) into a welding power ($P_2$), wherein the welding device (1) is designed to regulate the welding power ($P_2$) using a specified welding current ($I_2$), **characterized in that** a calculation unit (12) is provided that is designed to calculate a maximum supply power ($P_{1,max}$) from a supply voltage ($U_1$) of the welding device (1) and a maximum supply current ($I_{1,max}$) that can be delivered to the welding device (1) by an energy source (2), and to determine a maximum welding power ($P_{2,max}$) delivered by the welding device (1) from the maximum supply power ($P_{1,max}$), **and in that** a limiting unit (11) is provided, which is designed to limit the delivered welding power ($P_2$) to the maximum welding power ($P_{2,max}$) that can be delivered.

5. Welding device (1) according to claim 4, **characterized in that** a measuring unit (13) is provided that is designed to measure the supply voltage (U1).

6. Welding device (1) according to claim 4 or 5, **characterized in that** the limiting unit (11) is designed to limit the welding current ($I_2$) to limit the delivered welding power ($P_2$) to the maximum welding power ($P_{2,max}$) that can be delivered.

7. Welding device (1) according to one of claims 4 to 6, **characterized in that** the limiting unit (11) is designed to be activated and deactivated.

## Revendications

1. Procédé permettant de faire fonctionner un appareil de soudage (1), dans lequel l'appareil de soudage (1) est alimenté par une source d'énergie (2) avec une puissance d'alimentation ($P_1$) et convertit, pour la production d'un arc électrique de soudage (arc), au moins une partie de la puissance d'alimentation ($P_1$) en une puissance de soudage ($P_2$), dans lequel la puissance de soudage ($P_2$) est régulée par la prédéfinition d'un courant de soudage ($I_2$), dans lequel une tension d'alimentation ($U_1$) est déterminée, **caractérisé en ce qu'**un courant d'alimentation maximal ($I_{1,max}$) pouvant être fourni par la source d'énergie (2) à l'appareil de soudage (1) est prédéfini, **en**

ce qu'une puissance d'alimentation maximale ($P_{1,max}$) est calculée à partir de la tension d'alimentation ($U_1$) et du courant d'alimentation maximal ($I_{1,max}$), **en ce qu'**une puissance de soudage maximale ($P_{2,max}$) fournie par l'appareil de soudage (1) est déterminée à partir de la puissance d'alimentation maximale ($P_{1,max}$), **et en ce que** la puissance de soudage ($P_2$) est limitée à la puissance de soudage maximale ($P_{2,max}$) pouvant être fournie.

2. Procédé selon la revendication 1, **caractérisé en ce que** la puissance de soudage ($P_2$) est limitée par une limitation du courant de soudage ($I_2$).

3. Procédé selon l'une des revendications 1 à 2, **caractérisé en ce que** la puissance de soudage maximale ($P_{2,max}$) fournie par l'appareil de soudage (1) est déterminée en tenant compte d'une puissance de fonctionnement ($P_b$) à partir de la puissance d'alimentation maximale ($P_{1,max}$) pouvant être fournie par la source d'énergie (2) à l'appareil de soudage (1).

4. Appareil de soudage (1) permettant de produire un arc électrique de soudage (arc) par conversion d'une puissance d'alimentation (P1) en une puissance de soudage ($P_2$), dans lequel l'appareil de soudage (1) est configuré pour réguler la puissance de soudage ($P_2$) au moyen d'un courant de soudage ($I_2$) prédéfini, **caractérisé en ce qu'**une unité de calcul (12) est prévue, laquelle est configurée pour calculer, à partir d'une tension d'alimentation ($U_1$) de l'appareil de soudage (1) et d'un courant d'alimentation maximal ($I_{1,max}$) pouvant être fourni par une source d'énergie (2) à l'appareil de soudage (1), une puissance d'alimentation maximale ($P_{1,max}$), et pour déterminer, à partir de la puissance d'alimentation maximale ($P_{1,max}$), une puissance de soudage maximale ($P_{2,max}$) fournie par l'appareil de soudage (1), **et en ce qu'**une unité de limitation (11) est prévue, laquelle est configurée pour limiter la puissance de soudage ($P_2$) fournie à la puissance de soudage maximale ($P_{2,max}$) pouvant être fournie.

5. Appareil de soudage (1) selon la revendication 4, **caractérisé en ce qu'**une unité de mesure (13) est prévue, laquelle est configurée pour mesurer la tension d'alimentation ($U_1$).

6. Appareil de soudage (1) selon la revendication 4 ou 5, **caractérisé en ce que** l'unité de limitation (11) est configurée pour limiter le courant de soudage ($I_2$) afin de limiter la puissance de soudage ($P_2$) fournie à la puissance de soudage maximale ($P_{2,max}$) pouvant être fournie.

7. Appareil de soudage (1) selon l'une des revendications 4 à 6,
**caractérisé en ce que** l'unité de limitation (11) est configurée de manière à pouvoir être activée et désactivée.

FIG. 1

FIG. 2

FIG. 3

FIG. 4a

FIG. 4b

FIG. 4c

FIG. 5a

FIG. 5b

FIG. 5c

FIG. 6a

FIG. 6b

FIG. 6c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3523879 A1
- US 20180056428 A1
- US 20090277893 A1